# EUROPEAN PATENT SPECIFICATION

(11) **EP 1 512 107 B1**
(45) Date of publication and mention of the grant of the patent: **30.09.2009**
(21) Application number: 03755303.9
(22) Date of filing: 26.05.2003
(51) Int. Cl.: G06Q 10/00

(54) **EVENTGUIDED TRANSACTIONS**
EREIGNISGEFÜHRTE TRANSAKTIONEN
TRANSACTIONS GUIDEES PAR L'EVENEMENT

(30) Priority: 24.05.2002 SE 0201555
(43) Date of publication of application: 09.03.2005
(73) Proprietor: Clickoffice AB, 903 25 Ume (SE)
(72) Inventor: SJÖVIK JOHANSSON, Tommy, S-906 37 Umea (SE); HELLMAN, Sven, S-903 02 Umea (SE)
(74) Representative: Lindberg, Berndt Ake
(86) International application number: PCT/SE2003/000847
(87) International publication number: WO 2003/100685

(56) References cited:
- WO-A1-00/46732
- WO-A1-01/55887
- US-A- 5 710 889
- US-A1- 2001 018 674

## Description

### Technical field

The present invention relates to a server for event guided transactions in an open network for computer and telecommunication, whereby the server has a categorisation for the categories service, application and customer for access to the server.

### State of the art

In today's society companies are subject to an ever greater extent to domestic and global competition. In order to manage the hardening competition it is necessary to be the best for the products and services that they have to present to a market. Simultaneously the company should be able to present a wide product and/or service portfolio to its customers.

A way to achieve the above is to integrate a company's service portfolio with partners and suppliers of services in order to let the different actors focus on that which is exactly their core business. Here the technical development through the Internet, wideband connection, ASP (Administrable Service Provider) solutions, etc, have created the prerequisites for entirely new types of contact points between different companies.

For the new types of contact points there is no machine/device that in a general and effective way can integrate and handle contact points between different actors/companies among other things in order to ease and focus the companies' business and to bridge geographic distances. Bridging geographic distances is not the least important in order to that the company not feel forced to establish business activities in large city areas without also being able to offer employment in rural areas.

A field of operation that has made it possible for a company to concentrate on its core business is so-called "outsourcing/hosting" of necessary business that does not belong to the category core business. Here belong for instance postal, economics and accounting business, whereby for example the two last mentioned can be outsourced to a accounting office in order to make own operations more effective and facilitate focusing on the own end customer market.

Observed problems with outsourcing of for example economic operations such as accounting are that they have been a relatively static line of trade. However, the market for economic and administrative services faces structural changes. Buy-ups and mergers between different accounting and auditors' offices are in progress. Price-worthy customer administrative computer programs such as XOR, Hogia and SPCS ease the economic process a lot for the customer companies of accounting offices. This has also entailed that profitability in the traditional bookkeeping business has decreased. However, current technology and equipment does not sufficiently support rational methods of working between different actors as for instance in the economic operations customer company - computer program application supplier - auditors' offices chain.

A customer company for a computer program application supplier (application supplier) and auditors' offices, where the auditors' offices are also customers of the application supplier, experience technical and administrative problems in that:
- Economic routines are a necessary evil
- Small companies themselves work overtime in order to take care of economics
- Relatively high competence is still needed to install IT solutions and administrative systems, which is a scarce commodity in small companies
- Continual upgrades of own computer programs are a problem
- Companies often depend on auditors' offices to register the legal bookkeeping. This is even more true for follow-up and control of the economic situation
- Companies have access to the Internet and to an ever greater extent also to wideband
- Companies adjust requirements on control, security and correct management of outsourcing
- Companies that grow are faced with the alternative of using their own personnel to man economics functions that earlier were carried out by an office
- Companies with own economics personnel are sensitive to changes in personnel. Today many companies solve this through using personnel hiring companies for short term manning.

Today bookkeepers' and auditors' offices face among other things the following problems:
- A weakening market for simpler accountancy and a changed customer profile set new requirements.
- They lack powerful and price worthy tools in order to integrate customer economics functions with their own IT systems
- Buy-ups and mergers between different bookkeeping and economics offices change the competitive situation
- Bookkeeping and economics offices should develop their service supply through offering administrative solutions, support, education, advising, etc
- Office chains request machines/systems that allow shared information/databases and processes for several different types of actors/companies.

Suppliers of economy application computer programs compete on a more and more global market. Suppliers require simpler handling of distribution and penetration of new markets. Distribution channels change and the suppliers that have flexible programs can present their programs on the Internet for instance in collaboration with ASP suppliers. On the Internet customer companies can thereby load and run applications and store computer program related information.

However, today's application supplier lacks much of the total functionality that is needed in order to make the economic and administrative work of a company effective. However, this can be achieved through virtual integration of the functionality that exists in a number of different programs that today are the property of different actors such as service companies (accounting offices), computer program application companies and company hotels for computer programs. This means that a customer company tries to optimise the costs in its operations for management of IT and personnel and to focus on its own operations. However, what always remains is that someone in the company has total responsibility for the different administrative functions and for integrating auditing with reporting to the company's management.

At present there exists a number of hosting/ASP solutions round certain ERP suppliers' products (ERP; Enterprise Resource Planning), but no device or system that enables integration between an office and a customer company's process/routines. Neither is there any other device that integrates computer program applications.

Altogether there is therefore a need to solve problems concerning auditors' offices need of rational tools that make it possible to integrate operations and the collaboration between auditors' offices and customer companies. An auditors' office is in great need of tools to support its operational processes and to support customer companies in such a way as to make it possible to create new capabilities for effective collaboration. Suppliers of computer programs, for example economy computer programs, also require the tools that create simpler distribution channels and new markets.

The international patent application WO 00/77707 shows how a financial consultant administrates a plurality of accounts with a server and a database.

In WO 01/28 188 an auditing system that carries out accounting based on input activity information is described.

In WO 00/46732 a system for providing integrated interactive access to service provider's hosted applications disclosed.

US patent application 2001/018674 Al describes a global communication network for financial services.

In order to solve the problems and needs described above IT technical solutions are needed such that the machines and system that realise them have a direct channel to customers that include the above mentioned customer companies and miscellaneous offices. Here it is desirable that a new actor be created in the market that takes on a role as an independent actor in the market, providing economy/administration computer programs to offices and their customer companies so that operations and processes are coupled together in an effective way.

### Summary of the described invention

In order to realise a solution on the above problems the present invention provides a server for eventguided transactions in an open network for information and telecommunication, whereby the server has category interfaces for the categories service, application and customer for access to the server. The server includes:
a device for storage of new application computer programs and updates of existing ones for transactions via the interface for the category application;
a partitioning device for a predetermined memory area in the server, which defines service modules for the interface with the category service;
a communication interface in the server for at least one application computer program for each and every one of the service modules;
a switching device connected to the communication interface, which together with a device for logical determination of "true" or "false" for each application computer program decides if the switch should turn on a certain application computer program for a specific service module;
a device that couples the category interface for service to a service module through the communication interface;
a device that couples the category interface customer to at least one service module through the communication interface;
an identification code device that allocates each user a roll code and controls and updates it when logging in, which includes at least parameters for category identification, receiver, service module identity and either degree of authorisation or corrective measure;
indicators that are controlled by drivers for graphical viewing on a screen,
where according to the contents of the roll code the indicators through their indication make it possible to visualise a specific event that demands attention by a user corresponding to the parameter receiver in the roll code.

In an embodiment of the invention the category interfaces also include a portal for access to the server.

In another embodiment the application interface has total computer program transparency between users of service and customer interfaces in a module through the application computer program being coupled to the module with the service that the customer desires.

An additional embodiment prescribes that each user of the service interface choose optional software for the respective module through an application device.

Additionally the invention includes an embodiment where an update of an application and a new application are produced and initiated in an application device through the application interface, which frees module users from management of the update.

Furthermore, an embodiment includes all applications being coupled to a single module via the logical states "true" or "false" through a single switch, whereby the state "true" couples the application to the module.

Another embodiment includes that all modules are coupled to applications via the logical states "true" or "false" through a single switch for the respective application, whereby the state "true" for a module in the switch couples the application to the module.

A further embodiment of the invention consists in a roll code including a data string in the form of fields. Another embodiment allows the field receiver in the roll code to include several receivers for a roll code that is used for access to the server through the application interface. Further, in one embodiment the field service module identity in the roll code includes the identity of several modules on access to the server through the application interface.

In an alternative embodiment of the roll code (30, 40, 50) it is complemented with a field for each reference where multiple references are required for a field.

Another embodiment includes the modules themselves being linked to databases
where files common to customers and services are stored.

### Brief description of the drawings

In the following in the running text there are references to the attached drawings for better understanding of the present invention according to the given examples and embodiments, whereby:
**Figure 1** schematically shows a server according to the present invention;
**Figure 2** schematically shows three versions of roll codes according to the present invention; and
**Figure 3** schematically shows an embodiment of a roll code according to the present invention and its activation of indicators.

### Detailed description of the preferred embodiments

The invention according to the present description concerns a device in the form of a server/computer for connection to an open network for computer and telecommunication such as the Internet and the like. In this respect the server has at least three categories of connection interface for use by its functions. These three categories are service, customer, application. The category service is put at the disposal of companies that offer a service such as an outsourced one to the category customer, whereby the category customer has access to the service. The remaining category application is put at the disposal of companies that offer computer applications such as software and hardware associated with software.

The server will be further described in the following, but here information is provided about its unique properties in the form of providing the categories service and customer with a common choice of software through a common platform, so that transparency between information that is transferred between a customer company and a service company and vice versa is complete. Furthermore, via the application interface the server sees to it that service and customer companies receive a palette of relevant software included in the server and among which the service and customer companies choose their own combinations of them. In other words, the palette of software is the same at the service provider and at the customer to support. Furthermore, all along update of the software through the application interface is allowed without direct involvement of either the service or the customer company.

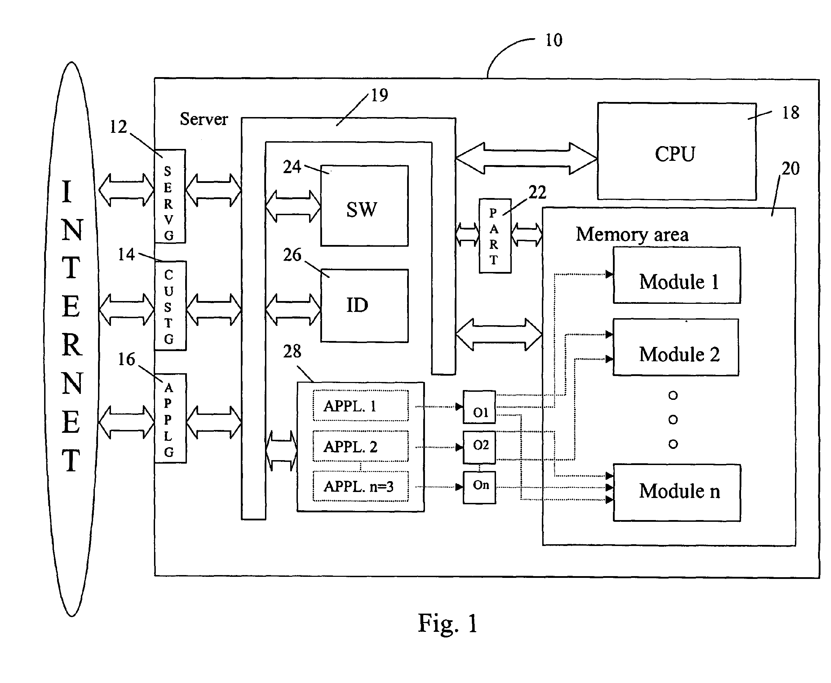

The server will be described in more detail with reference to Fig. 1. Figure 1 shows schematically a server 10 connected to the Internet according to the present invention. In the present invention it is implicit that the invention can use several servers that are professionally connected to each other. The server includes a service interface 12, a customer interface 14 and an application interface 16 to the Internet. The server 10 communicates internally via a bus 19 known to experts for addressing data and control instructions between units included in the server. Known such buses are for instance the Intel@ 845 (593 FC-BOA) chip, Intel@ ICH2 (360 EBOA) chip etc.

CPU 18 in fig. 1 shows the processor(s) with motherboards, where the methods of operation are well-known by professionals in the technical field, for which reason it is not described in detail, but it is the characteristics supplied to the server 10 according to the present invention that are unique and innovative. In additional the server 10 consists of a memory area 20 including Module 1-Module n, where n is a variable that gives the number of modules, which is determined by the number of service companies that use the service interface 12. To the memory area 20 via the bus 19 is connected a device for partitioning 22 the memory area 10 into modules 1-n.

Block 24 in fig. 1 shows schematically the software SW that is used in order to control the new functions in the server 10 according to the invention and block 26 consists of a device, ID, that handles the identification code that the present invention uses.

In block 28 are shown schematically the applications that are used by the different modules 1-n, whereby applications are shown schematically as dotted blocks. Blocks O1-O n show switches for each of the applications APPL 1-APPL n that decide which applications each of the modules Module 1-Module n subscribes to or has access to. In one embodiment of the invention switches O1-O n have logical states for "true" or "false" with respect to each application APPL 1-APPL n and their affiliations to each of the modules Module 1-Module n. The logical states true and false can be represented binarily in a known way and for example with Boolean logic (algebra). Inverse logic is not excluded as a feasible part of the invention.

In fig. 1 Module 1 subscribes to an application, APPL 1 through the switch O 1 whose logical state is true for APPL 1. Module 2 subscribe to two applications, APPL 1 and APPL 2 through switches O 1 and O 2 that are set to true for the respective application. The last module Module n in a group of a predetermined number of modules subscribes to all three applications, APPL 1-APPL 3 through switches O1-O n being set to the logical state true for this module, O n, where n=3 in this embodiment. In this example each of the switches O 1-O 3 has been connected to an application APPL 1-APPL 3. It is nonetheless understood that a switch can be coupled to only one module and thereby have logical states for each of the applications. Other now known algorithms for making logical connections for the switch are not excluded according to the present invention.

According to what fig. 1 shows the connections between the application switch module schematically have been drawn with dotted arrows in order to more easily visualise the connections and the communication. In reality this communication takes place through the bus 19. The software or programs that are stored in block 24, SW in fig. 1, controls and monitors the functions in server 10 according to the present invention, which is not described in more detail, but which is considered to belong to what is known by a professional in the technical field. The software 24 controls the partitioning device 22 that partitions modules in the memory area 20.

The modules Module 1-Module n are closed memory areas each of which is administrated by a service company with computer program applications to which customers of a service company with a specific module also have access, whereby total computer program transparency between customer and service company is achieved. The modules themselves can include links to databases where files for customer and service company are stored for common handling. However, the common handling is controlled by a roll code, which is described in the following.

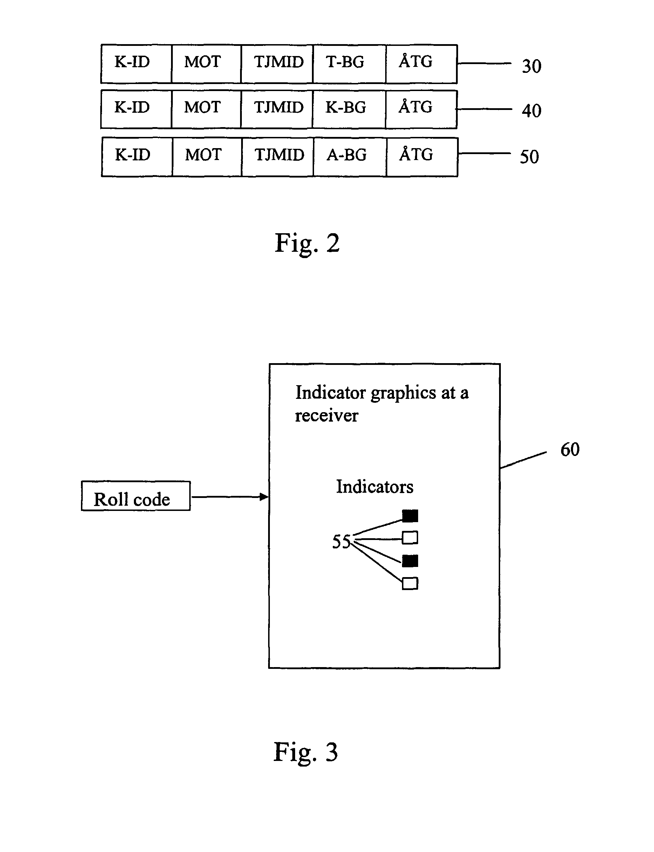

Yet another unique property that the present invention has is the roll code that each and everyone that logs in on server 10 is assigned. Here it has been denoted roll code because it identifies the role a user has at log-in on the server 10 via any of the interfaces 12, 14, 16. The roll code, in addition to the usual log in process, can be different for each user or the same for some of the users in one of the interfaces service 12, customer 14 and application 16. In fig. 2 three versions of the roll code 30, 40, 50 are shown that in an embodiment of the invention consist of data strings including a field for each role in the code, where the data strings have at least have fields for category identity (K-ID), receiver (MOT), service module identity (TJMID) and one of degree of service interface authorisation (T-BG), degree of customer interface authorisation (K-BG) or degree of application interface authorisation (A-BG) and measure taken (ÅTG).

In fig. 2 are shown three versions of the roll code, which are basically of the same design. The code 30 is for a user that logs in on the server 10 as a service category via the service interface 12, i.e., a module administrator. The code 40 is used by a user that belongs to the customer category via the customer interface 14 and is a customer of a user in the service category and thereby also to a module. The last code 50 in fig. 2 is used by an application administrator via the application interface 16.

In the embodiment according to fig. 2 there are five fields in the roll code, which are denoted K-ID, MOT, TJMID, T-BG and ÅTG. Which interface a user belongs to is identified through the field K-ID. The next field MOT gives the receiver of a measure taken in the field ÅTG. The field TJMID shows which module is affected by the measure in the field ÅTG. This field is a little special for a user of the application interface as he or she occasionally needs to take measures that concern several of the modules Module 1- Module n depending on which APPL 1-APPL 3 in fig. 1 that require a measure to be taken. Therefore there is an embodiment of the code that underlies TJMID in the roll code 50 indicative of which modules are affected by an application measure. In this respect also the code underlying the field MOT can be used to address several receivers. It is also possible to take measures for each of the modules, whereby this embodiment of the field TJMID is not required.

In another embodiment of the roll code 50 for the application interface 16 fields are expanded that require multiple references, for example for modules and for receivers with a field for such.

In most of the embodiments of the invention when the server 10 modules are used by service suppliers in the same category of service a customer is only connected to one module and the same goes for service suppliers. However, this is not the case if the server offers services from several different kinds of category of company, where a customer can be connected to several modules in order to receive service from several companies.

The roll code is analysed by the identity function in block 26, ID, shown schematically in fig. 1, preferably for each log on and log off through any of the interfaces 12, 14, 16, whereby the roll code can at least be updated in the field measure (ÅTG) at log off depending on the measure or measures a user has taken after logging in. The category identity field in the roll code identifies which interface 12, 14, 16 has been used for logging in. The field for the receiver will be described in more detail in conjunction with fig. 3. Here it can said that it is attached to a computer at one of the users in the different categories and depends on the measure taken. For a customer that logs in on any of the modules Module 1-Module n, which belong to different service suppliers, the field service module field in the roll code module tells which module the customer has access to, which is the work area in the memory
where a service supplier and customer have their tools for exchange of information.

The three above mentioned fields for degree of authorisation (T-B G, K-BG, A-BG) give according to some known scale what measures each user is allowed to take in the modules and what concerns installation of applications, updating, etc. Finally what a logged in user has done in the server is given by a code in the measure field for the roll code.

Figure 3 shows schematically what the roll code does at a receiver for a measure that has been taken. In the figure indicator graphics for a receiver that is given in the receiver field in the roll code shows which measures have been taken and/or shall be taken. The indicator graphics have been filled with black colour for what has happened and will happen according to a certain pattern determined by the roll codes 30, 40, 50 depending on the receiver and measure in corresponding fields in the roll code. The indicator graphics can also indicate using other fields in the roll codes 30, 40, 50.

The graphics for the indicators 55 can preferably be realised on a computer screen via a portal 60 of the server 10, which can be included in the respective interface 12, 14, 16. Further, the indicators 55 can be equipped with text (not shown) in order to facilitate interpretation of what the indicators display through the roll code.

The present invention as it has been described ties together processes, rolls, information and IT through internet based techniques that achieve a virtual integration of service, customer and application companies.

It is the attached patent claims' formulation that provides additional embodiments for a professional in the technical field.

## Claims

1. A server (10) for eventguided transactions in an open network for computer and telecommunication, whereby the server (10) has category interfaces (12, 14, 16) for the categories service, application and customer for access to the server (10), comprising:
a device (28) for storing of new application computer programs and updates of existing such for transactions through the interface (16) for the category application;
a partitioning device (22) for a predetermined memory area (20) in the server (10), which defines service modules for the interface (12) with the category service;
a communication interface (19) in the server for at least one application computer program for each of the service modules;
a switching device (O 1, O 2- n) connected to the communication interface (19), which using a device for logical determination of true or false for each application computer program decides if the switch (O 1, O 2-O n) should couple a certain application computer program to a certain service module;
a device (24) that connects the category interface (12) of a service to a service module through the communication interface (19);
a device (24) that connects the category interface (14) customer to at least one servi ce module through the communication interface (19);
an identification code device (26), arranged to identify the role a user has at log-in to said server (10), **characterised in that** the identification code device (26) is arranged to allocate each user a roll code (30, 40, 50) and control and update the same at log-in,
where said roll code includes at least parameters for category identification (K-ID), service module identity, (TJMID), and degree of authorisation (T-BG, K-HG, A-B G);

2. A server (10) according to claim 1, **characterised in that** said roll code further comprises parameters for receiver (MOT) and measure (ÅTG).

3. A server (10) according to claim 3, **characterised in** comprising indicators (55) controlled by drivers for graphical viewing on a screen, where the indicators (55) according to the content of the roll code with their indication are made to show a specific event that requires the attention of a user corresponding to the parameter receiver (MOT) in the roll code (30, 40, 50).

4. A server (10) according to any one of claims 1-3, **characterised in that** the category interfaces also includes a portal (60) for access to the server (10).

5. A server (10) according to any one of claims 1-4, **characterised in that** the application interface (16) has total computer program transparency between users of the service and customer interfaces (12, 14) in a module through the application computer program being connected to the module with the service that the customer requests.

6. A server according to any one of claims 1-5, **characterised in that** each user of the service interface 12 freely chooses software for the respective module in an application device (28).

7. A server according to any one of claims 1-6, **characterised in that** updating an application and a new application are executed and initiated in an application device (28) through the application interface (16), which frees module users from updating.

8. A server according to any one of claims 1-7, **characterised in that** all applications (APPL 1, APPL 3, APPL 3) are coupled to a single module (Module 1-Module n) via the logical states "true" or "false" through a single switch (O 1-O n), whereby the state "true" connects the application to the module.

9. A server according to any of claims 1 -6, **characterised in that** all modules (Module 1-Module n) are coupled to applications (APPL 1, APPL 2, APPL 3) via the logical states allowance "true" or "false" by a single switch (O1-O n) for the respective application (APPL 1, APPL 3, APPL 3), whereby the state "true" for a module (Module 1-Module n) in the switch couples the application to the module.

10. A server according to any of claims 1-9, **characterised in that** the roll code is included in a data string in the form of fields.

11. A server according to any of claims 2-10, **characterised in that** the field receiver (MOT) in the roll code includes several receivers for a roll code (50) that is used for access to the server (10) through the application interface (16).

12. A server according to any of claims 1-11, **characterised in that** the field service module identity (TJMID) in the roll code includes identities for several modules on access to the server (10) through the application interface (16).

13. A server according to any of claims 1-10, **characterised in that** the roll code (3a, 40, 50) is extended by a field for each reference when multiple references for a field are needed.

14. A server according to any of claims 1-13, **characterised in that** the modules in themselves are linked to databases where files common to customers and services are stored.

## Patentansprüche

1. Server (10) für ereignisgeführte Transaktionen in einem offenen Netzwerk für Computer und Telekommunikation, wobei der Server (10) Kategorie-Schnittstellen (12, 14, 16) für die Kategorien Dienstleistung, Anwendung und Kunde für den Zugang zum Server (10) aufweist, mit:
einer Vorrichtung (28) zum Speichern neuer Computer-Anwendungsprogramme und von Updates bestehender solcher Programme für Transaktionen über die Schnittstelle (16) für die Kategorie Anwendung;
einer Partitionierungsvorrichtung (22) für einen vorgegebenen Speicherbereich (20) im Server (10), die Dienstleistungsmodule für die Schnittstelle (12) der Kategorie Dienstleistung definiert;
einer Kommunikationsschnittstelle (19) im Server für mindestens ein Computer-Anwendungsprogramm für jedes der Dienstleistungsmodule;
eine mit der Kommunikationsschnittstelle (19) verbundene Schaltvorrichtung (0 1, 0 2 - 0 n), die mittels einer Vorrichtung zur logischen Ermittlung von wahr oder falsch für jedes Computer-Anwendungsprogramm entscheidet, ob der Schalter (0 1, 0 2 - 0 n) ein bestimmtes Computer-Anwendungsprogramm an ein bestimmtes Dienstleistungsmodul koppeln soll;
eine Vorrichtung (24), die die Kategorie-Schnittstelle (12) einer Dienstleistung über die Kommunikations-Schnittstelle (19) mit einem Dienstleistungsmodul verbindet;
eine Vorrichtung (24), die die Kategorie-Schnittstelle (14) Kunde über die Kommunikations-Schnittstelle (19) mit mindestens einem Dienstleistungsmodul verbindet;
eine Erkennungscode-Vorrichtung (26) zur Erkennung der Rolle, die ein Benutzer beim Einloggen beim genannten Server (10) hat, **dadurch gekennzeichnet, dass** die Erkennungscode-Vorrichtung (26) dazu dient, jedem Benutzer einen Rollencode (30, 40, 50) zuzuteilen und denselben beim Einloggen zu kontrollieren und zu aktualisieren, wobei der Rollencode mindestens Parameter für die Kategorienkennung (K-ID), die Dienstleistungsmodulidentität (TJMID) und den Berechtigungsgrad (T-BG, K-HG, A-B G) umfasst.

2. Server (10) nach Anspruch 1, **dadurch gekennzeichnet, dass** der Rollencode weiterhin Parameter für Empfänger (MOT) und Massnahme (ÅTG) umfasst.

3. Server (10) nach Anspruch 3, **gekennzeichnet durch** Anzeiger (55), die von Treibern für die graphische Darstellung auf einem Bildschirm gesteuert sind, wobei die Anzeiger (55) je nach dem Inhalt des Rollencodes mit ihren Anzeigen dazu ausgebildet sind, ein spezifisches Ereignis anzuzeigen, das die Aufmerksamkeit eines Benutzers erfordert, der dem Parameter Empfänger (MOT) im Rollencode (30, 40, 50) entspricht.

4. Server (10) nach einem der Ansprüche 1 bis 3, **dadurch gekennzeichnet, dass** die Kategorie-Schnittstellen auch ein Portal (60) für den Zugang zum Server (10) umfassen.

5. Server (10) nach einem der Ansprüche 1 bis 4, **dadurch gekennzeichnet, dass** die Anwendungs-Schnittstelle (16) volle Computerprogramm-Transparenz zwischen Benutzern der Dienstleistungs- und der Kunden-Schnittstellen (12, 14) in einem Modul aufweist durch**dadurch**, dass das Computer-Anwendungsprogramm aufweist, das mit dem Modul mit der Dienstleistung verbunden ist, die der Kunde verlangt.

6. Server nach einem der Ansprüche 1 bis 5, **dadurch gekennzeichnet, dass** jeder Benutzer der Dienstleistungs-Schnittstelle 12 in einer Anwendungsvorrichtung (28) frei aus Software für das jeweilige Modul auswählt.

7. Server nach einem der Ansprüche 1 bis 6, **dadurch gekennzeichnet, dass** das Aktualisieren einer Anwendung und eine neue Anwendung über die Anwendungs-Schnittstelle (16) in einer Anwendungs-Vorrichtung (28) ausgeführt und initiiert werden, wodurch für Modulbenutzer das Aktualisieren entfällt.

8. Server nach einem der Ansprüche 1 bis 7, **dadurch gekennzeichnet, dass** alle Anwendungen (APPL 1, APPL 3, APPL 3) über die logischen Zustände "wahr" oder "falsch" über einen einzelnen Schalter (0 1 - 0 n) mit einem einzelnen Modul (Modul 1 - Modul n) gekoppelt sind, wobei der Zustand "wahr" die Anwendung mit dem Modul verbindet.

9. Server nach einem der Ansprüche 1 bis 6, **dadurch gekennzeichnet, dass** alle Module (Modul 1 - Modul n) über die logischen Zustände Erlaubnis "wahr" oder "falsch" durch einen einzelnen Schalter (0 1 - 0 n) für die jeweilige Anwendung (APPL 1, APPL 3, APPL 3) mit Anwendungen (APPL 1, APPL 2, APPL 3) gekoppelt sind, wobei der Zustand "wahr" für ein Modul (Modul 1 - Modul n) im Schalter die Anwendung mit dem Modul koppelt.

10. Server nach einem der Ansprüche 1 bis 9, **dadurch gekennzeichnet, dass** der Rollencode in Form von Feldern in einem Datenstrang enthalten ist.

11. Server nach einem der Ansprüche 2 bis 10, **dadurch gekennzeichnet, dass** das Feld Empfänger (MOT) im Rollencode mehrere Empfänger für einen Rollencode (50) umfasst, der für den Zugang zum Server (10) über die Anwendungs-Schnittstelle (16) verwendet wird.

12. Server nach einem der Ansprüche 1 bis 11, **dadurch gekennzeichnet, dass** das Feld Dienstleistungsmodul-Identität (TJMID) im Rollencode Identitäten für mehrere Module umfasst, die über die Anwendungs-Schnittstelle (16) auf den Server (10) zugreifen.

13. Server nach einem der Ansprüche 1 bis 10, **dadurch gekennzeichnet, dass** der Rollencode (30, 40, 50) durch ein Feld für jede Referenz erweitert wird, wenn mehrfache Referenzen für ein Feld erforderlich sind.

14. Server nach einem der Ansprüche 1 bis 13, **dadurch gekennzeichnet, dass** die Module selbst mit Datenbanken verbunden sind, wo gemeinsame Dateien von Kunden und Diensten gespeichert sind.

## Revendications

1. Serveur (10) pour transactions événementielles dans un réseau ouvert pour ordinateur et télécommunication, le serveur (10) ayant des interfaces de catégorie (12, 14, 16) pour les catégories service, application et client pour l'accès au serveur (10), comprenant:
un dispositif (28) de stockage de nouveaux logiciels d'application informatiques et de mises à jour de tels logiciels existants pour des transactions par l'intermédiaire de l'interface (16) pour la catégorie application;
un dispositif de partitionnement (22) pour un domaine de mémoire (20) prédéterminé dans le serveur (10), lequel définit des modules de service pour l'interface (12) de la catégorie service;
une interface de communication (19) dans le serveur pour au moins un logiciel d'application informatique pour chacun des modules de service;
un dispositif de commutation (0 1, 0 2 - 0 n) relié à l'interface de communication (19), lequel décide, au moyen d'un dispositif de détermination logique vrai ou faux, pour chaque logiciel d'application informatique si le commutateur (0 1, 0 2 - 0 n) doit accoupler un logiciel d'application informatique donné à un module de service donné;
un dispositif (24) qui relie l'interface de catégorie (12) d'un service à un module de service par l'intermédiaire de l'interface de communication (19);
un dispositif (24) qui relie l'interface de catégorie (14) client à au moins un module de service par l'intermédiaire de l'interface de communication (19);
un dispositif code d'identification (26) agencé de manière à identifier le rôle que détient un utilisateur à l'ouverture de la session sur le serveur (10), **caractérisé en ce que** le dispositif code d'identification (26) est agencé de manière à attribuer à chaque utilisateur un code de rôle (30, 40, 50) et à contrôler et mettre à jour ce dernier à l'ouverture de la session, où ledit code de rôle comprend au moins des paramètres pour l'identification de la catégorie (K-ID), l'identité du module de service (TJMID) et le degré d'autorisation (T-BG, K-HG, A-B G).

2. Serveur (10) selon la revendication 1, **caractérisé en ce que** ledit code de rôle comprend en outre des paramètres pour le destinataire (MOT) et la mesure (ÅTG).

3. Serveur (10) selon la revendication 3, **caractérisé en ce qu'**il comprend des indicateurs (55) commandés par des pilotes pour la visualisation graphique sur un écran, où les indicateurs (55) montrent selon le contenu du code de rôle par leur indication un événement spécifique qui demande l'attention d'un utilisateur correspondant au paramètre destinataire (MOT) dans le code de rôle (30, 40, 50).

4. Serveur (10) selon l'une quelconque des revendications 1 à 3, **caractérisé en ce que** les interfaces de catégorie comprennent également un portail (60) pour l'accès au serveur (10).

5. Serveur (10) selon l'une quelconque des revendications 1 à 4, **caractérisé en ce que** l'interface application (16) a une transparence totale au niveau logiciel informatique entre utilisateurs des interfaces service et client (12, 14) dans un module par le fait que le logiciel d'application informatique est relié au module avec le service que le client demande.

6. Serveur selon l'une quelconque des revendications 1 à 5, **caractérisé en ce que** chaque utilisateur de l'interface service 12 choisit librement des logiciels pour le module respectif dans un dispositif applications (28).

7. Serveur selon l'une quelconque des revendications 1 à 6, **caractérisé en ce que** la mise à jour d'une application et une nouvelle application sont exécutées et initiées dans un dispositif applications (28) par l'intermédiaire de l'interface application (16), ce qui dispense les utilisateurs des modules de la mise à jour.

8. Serveur selon l'une quelconque des revendications 1 à 7, **caractérisé en ce que** toutes les applications (APPL 1, APPL 3, APPL 3) sont accouplées à un module unique (module 1 - module n) par l'intermédiaire des états logiques "vrai" ou "faux" par un commutateur unique (0 1 - 0 n), l'état "vrai" reliant l'application au module.

9. Serveur selon l'une quelconque des revendications 1 à 6, **caractérisé en ce que** tous les modules (module 1 - module n) sont accouplés à des applications (APPL 1, APPL 2, APPL 3) par l'intermédiaire des états logiques permission "vrai" ou "faux" par un commutateur unique (0 1 - 0 n) pour l'application respective (APPL 1, APPL 3, APPL 3), l'état "vrai" pour un module (module 1 - module n) dans le commutateur accouplant l'application au module.

10. Serveur selon l'une quelconque des revendications 1 à 9, **caractérisé en ce que** le code de rôle est contenu dans une chaîne de données sous la forme de champs.

11. Serveur selon l'une quelconque des revendications 2 à 10, **caractérisé en ce que** le champ destinataire (MOT) dans le code de rôle inclue plusieurs destinataires pour un code de rôle (50) qui est utilisé pour l'accès au serveur (10) par l'interface application (16).

12. Serveur selon l'une quelconque des revendications 1 à 11, **caractérisé en ce que** le champ identité module de service (TJMID) dans le code de rôle inclue des identités pour plusieurs modules ayant accès au serveur (10) par l'interface application (16).

13. Serveur selon l'une quelconque des revendications 1 à 10, **caractérisé en ce que** le code de rôle (30, 40, 50) est complété par un champ pour chaque référence lorsque des références multiples pour un champ sont requises.

14. Serveur selon l'une quelconque des revendications 1 à 13, **caractérisé en ce que** les modules eux-mêmes sont liés à des bases de données où des fichiers communs de clients et services sont stockés.
